# EUROPEAN PATENT APPLICATION

(11) **EP 0 906 879 A1**
(43) Date of publication of application: **07.04.1999**
(21) Application number: 97830493.9
(22) Date of filing: 03.10.1997
(51) Int. Cl.: B65G 47/52

(54) **A device for interconnecting two conveyors**

(71) Applicant: SYFAL S.p.A., 41043 Formigine (MO) (IT)
(72) Inventor: Stefani, Franco, 41049 Sassuolo (MO) (IT)
(74) Representative: Gotra, Stefano

(57) **Abstract**

The invention relates to a device for interconnecting two conveyors, where a first conveyor (1) has an unloading end which does not directly connect with a loading end of a second conveyor (2), an active surface of which second conveyor (2) is a continuation of an active surface of said first conveyor (1) in a transport line. In a zone comprised between the unloading end and the loading end of the respective first and second conveyors, the device comprises means for pneumatically acting upon objects unloaded from the first conveyor (1).

## Description

The invention relates to a device for interconnecting two conveyors.

Specifically though not exclusively the invention can be usefully employed in the ceramics industry for interconnecting two conveyors, one at least of which is of the belt-type, used consecutively for transporting ceramic tiles.

The need for a connection arises because the unloading end of the first conveyor, upstream with reference to the advancement direction of the tiles, is necessarily situated at a distance from the loading end of the second conveyor, set downstream. This leads to a discontinuity in the active tile-transporting branches of the conveyors. The distance between the two conveyors is proportional to the diameters of the end rollers or wheels the flexible elements (belts, chains) of the conveyors are wound about.

The problem of guaranteeing correct passage of a tile from one conveyor to another arises each time - and in reality frequently - the rapport between the tile size and the distance between the conveyors exceeds a determined value.

When the rapport is below this value there is no problem of transfer from one conveyor to the other.

The prior art has not up to now taught effective solutions to the above-mentioned problem. The attempts made, based essentially on the interposition between the conveyor ends of roller planes formed by rollers having much smaller diameters than those of the end wheels the flexible elements are wound about, are characterised by important constructional complications, which have the inevitable consequence of negatively affecting costs of production and maintenance.

Added to this is the fact that the prior art inventions are distinguished by a certain "rigidity", in the sense that they have a built-in inability to adapt to differing situations, i.e. enabling adjustments to be made according to the positions of the ends of the conveyors to be interconnected.

A main aim of the present invention is to obviate the above-discussed limits and lacks in the prior art.

A further aim of the present invention is simply and effectively to solve the problem of positioning the conveyed elements, in the present example tiles, as they are moving along a transport line, by means of special manoeuvring operations.

An advantage of the invention is that it is both constructionally and functionally simple.

A further advantage is that it is structurally independent of the line it is inserted into.

A still further advantage is that it can perform manoeuvring operations on the conveyed elements without occasioning them damage of any kind.

These aims and advantages and others besides are all attained by the present invention, as it is characterised in the claims appended hereto.

Further characteristics and advantages of the present invention will better emerge from the detailed description that follows of some preferred but non-exclusive embodiments of the invention, illustrated purely by way of non-limiting example in the accompanying figures of the drawings, in which:

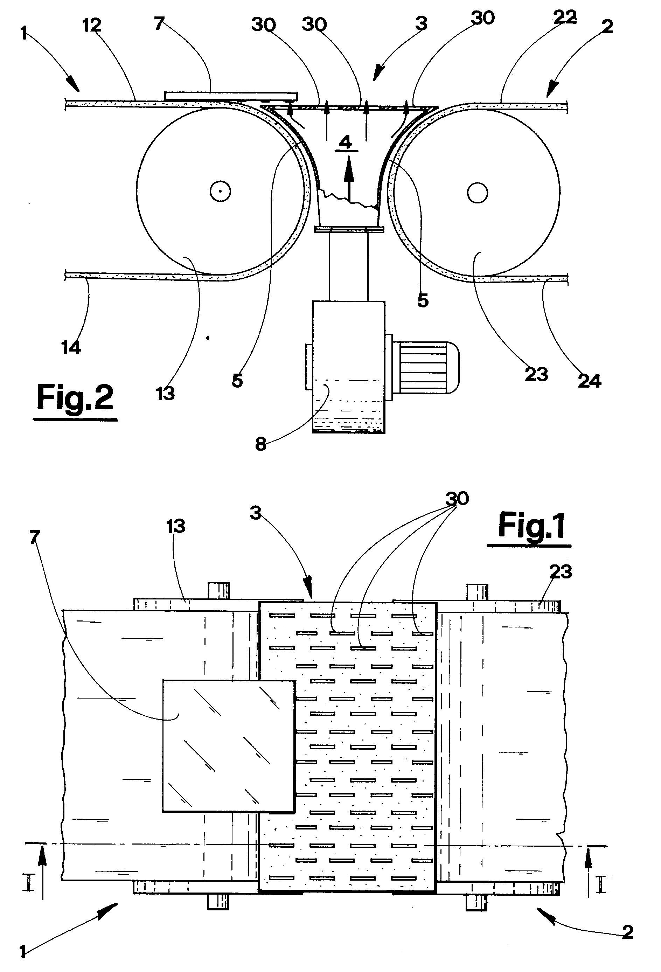

figure 1 is a schematic plan view from above of a first embodiment of the invention;
figure 2 is a schematic section made according to line I-I of figure 1;
figure 3 is a schematic plan view from above of a second embodiment thereof;
figure 4 is a schematic plan view from above of a further embodiment thereof.

With reference to the above-mentioned figures of the drawings, 1 denotes in its entirety a first belt conveyor, used for the transport of ceramic tiles or slabs 7, which first conveyor is inserted in a transport line also including a second conveyor belt 2.

The second conveyor belt 2 is in effect the continuation of the first belt 1, having its loading end located at a short distance from the unloading end of the first conveyor belt 1. The necessary distance between the unloading end of the first conveyor 1 and the loading end of the second conveyor 2 creates a discontinuity between the tile-transporting surfaces 12 and 22 of the respective belts 1 and 2. The size of this discontinuity is proportional to the diameters of the end rollers 13 and 23 about which the respective flexible belts 14 and 24 of the two conveyors 1 and 2 are wound.

Located in the zone comprised between the loading and unloading ends of the respective conveyors is a pneumatic support device comprising a passage plane 3, provided with mouths or holes 30 for generating pressurised air jets in an upwards direction.

The upper surface of the passage plane 3 is normally positioned just below (never above) the ideal prolongation of the active conveyor branch 12 of the conveyor.

In the illustrated embodiments the holes 30 are elongate in the conveyor belt advancement direction and are distributed in a staggered arrangement on the passage plane 3.

They are arranged in such a way as to generate a sufficiently uniform state over the entire passage plane 3.

In this regard, however, it must be underlined that many and varied shapes and distributions of the holes are possible in order for the aim to be achieved, which is that of pneumatically supporting the tiles 7 in transit (or simply placed) on the passage plane 3 in such a way that no physical contact is made between plane 3 and tile.

An especially advantageous embodiment is one in which the passage plane 3 is located immediately above a closed chamber 4 into which air or gas or an air-gas mixture is injected during functioning of the invention, for example by means of a ventilator 8.

The chamber 4 is laterally delimited by two concave flanks 5 equally distanced on either side from the unloading end of the first conveyor 1 and the loading end of the second conveyor 2. The two flanks 5 have concave profiles which approximately follow and match the convex shape of said ends 1 and 2.

The invention functions very simply. The tiles 7, initially resting on the active transporting surface 12, are translated therefrom on to the passage plane 3, on which they are supported by a cushion of air blowing against the bottom surface thereof, emanating from the pressurised air jets issuing from the holes 30. The very low friction involved allows the tiles 7 to continue through inertia on their way across the passage plane 3, rapidly crossing it and reaching the active transport surface 22 of the second conveyor 2, thus continuing on their way without undergoing any noticeable variation in speed and retaining their original positioning relative to the transport advancement direction.

Should it be so desired, the position of the tile 7 with respect to the advancement direction can be changed: in a further embodiment of the invention, the presence of appropriate laterally-situated air jets situated on the plane 3 can operate on the sides of the tiles 7. The jets are produced by nozzles 9 especially positioned and actuated by means of solenoid valves, so that an appropriate moment of rotation (with axis perpendicular to the plane 3) can be imparted on the tiles 7 transiting on the plane 3. Special guide means 6, superiorly projecting from the passage plane 3 and the active transport surface 22, can interact with the tiles 7, stopping their rotation so that they are correctly orientated on the transport surface 22 with respect to their advancement direction.

The above-described device can of course be used at any point in a tile transport line as an independent device for turning single tiles such as to orient them in a predetermined position with respect to the advancement direction thereof. As the tile is pneumatically supported, the frictional resistance to rotation about a vertical axis is insignificant; indeed the only resistance to be overcome is due to inertia. This all means that the change in orientation can be achieved very quickly.

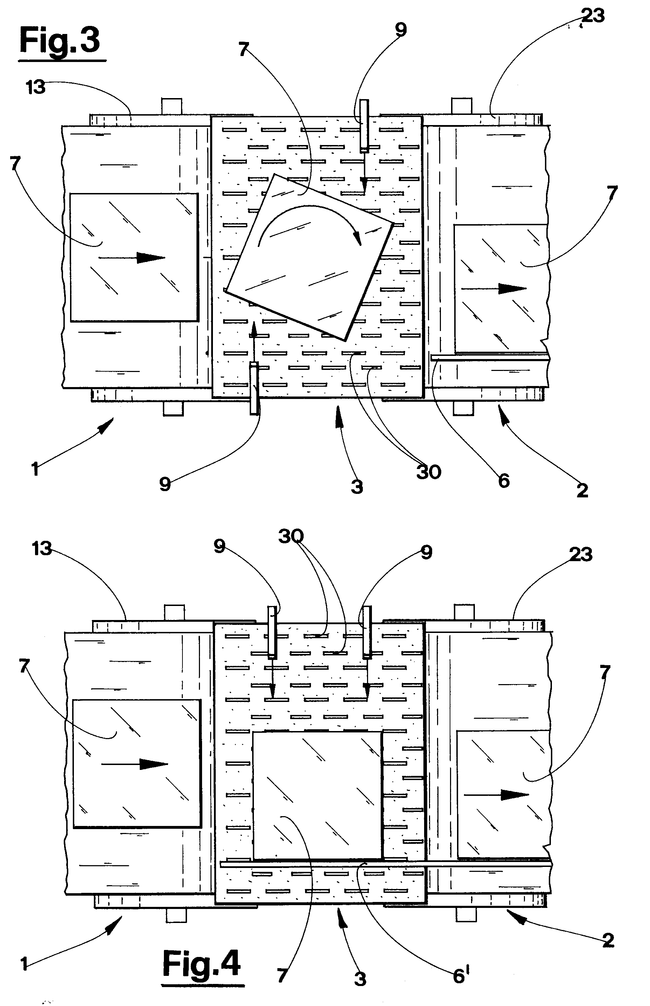

In a further embodiment, represented in figure 4, the position of the two nozzles 9 on one side of the plane 3 enables the transiting tile 7 to be laterally displaced on command. A correct positioning of the tile 7 is guaranteed by the presence of a special guide 6' positioned on the plane 3 so as to interact mechanically with the tile 7.

Among other things, the invention has the advantage of being structurally independent of the conveyors constituting the transport line, so that there is no structural obstacle to adjustment, regulation or any other operation being performed on the ends of the two conveyors connected thereby.

## Claims

1. A device for interconnecting two conveyors in a transport line, where a first conveyor (1) exhibits an unloading end which is not connected continuously to a loading end of a second conveyor (2); where an active transport surface (22) of said second conveyor (2) is a continuation of an active transport surface (12) of said first conveyor (1); characterised in that said device comprises means for pneumatically supporting objects unloaded by said first conveyor (1) in a zone comprised between said unloading end and said loading end.

2. The device of claim 1, characterised in that said means for pneumatically supporting comprise a passage plane (3) situated between said unloading end and said loading end, which passage plane (3) is provided with holes (30) through which upwardly-directed pressurised air jets are generated.

3. The device of claim 2, characterised in that said holes (30) are elongate in a same direction as an advancement direction of the objects on the passage plane (3).

4. The device of claim 2 or 3, characterised in that said holes (30) are located in a staggered arrangement on said passage plane (3).

5. The device of any one of claims 2, 3 or 4, characterised in that the passage plane (3) superiorly delimits a chamber (4) into which air is injected and maintained at pressure.

6. The device of claim 5, characterised in that said chamber (4) is laterally bounded by two concave flanks (5); said flanks being situated at a short distance from said unloading end of said first conveyor (1) and said loading end of said second conveyor (2).

7. The device of any one of claims from 2 to 6, characterised in that it comprises at least one nozzle (9) for generating at least one air jet able to act laterally on single objects transiting on said passage plane (3), in such a way as to cause a deflection in orientation or position of said single objects.

8. The device of claim 7, characterised in that it comprises at least two nozzles (9) which are staggered and situated opposite one another in such a way as to exert on the single objects in transit on the passage plane (3) a predetermined rotation moment having an axis which is normal to that of said passage plane (3); guide means (6) being provided for arresting rotation of each single object so that said object achieves a predetermined orientation in relation to an advancement direction thereof.

9. The device of claim 7, characterised in that it comprises at least two nozzles (9) arranged on a same side of said passage plane (3) which nozzles (9) on command operate on a same side of said single objects to produce a lateral displacement thereof during transit on said plane (3); guide means (6') being provided on said plane (3) for interacting mechanically with each single object in order to position said object according to a predetermined position.

10. The device of any one of the preceding claims, characterised in that said objects are constituted by slabs or tiles (7).
